# EUROPÄISCHE PATENTSCHRIFT

(11) **EP 1 882 134 B1**
(45) Veröffentlichungstag und Bekanntmachung des Hinweises auf die Patenterteilung: **24.10.2018**
(21) Anmeldenummer: 05761137.8
(22) Anmeldetag: 08.06.2005
(51) Int. Cl.: F25D 17/06, F25D 23/06

(54) **KÄLTEGERÄT MIT UMLUFTKÜHLUNG**
REFRIGERATING APPLIANCE WITH CIRCULATING AIR COOLING
APPAREIL FRIGORIFIQUE DE REFROIDISSEMENT À CIRCULATION D'AIR

(30) Priorität: 10.05.2005 DE 102005021557; 10.05.2005 DE 102005021535; 10.05.2005 DE 102005021560
(43) Veröffentlichungstag der Anmeldung: 30.01.2008
(73) Patentinhaber: BSH Hausgeräte GmbH, 81739 München (DE)
(72) Erfinder: GÖRZ, Alexander, 73432 Aalen (DE); SPILLER, Ralf, 89537 Giengen (DE)
(86) Internationale Anmeldenummer: PCT/EP2005/052628
(87) Internationale Veröffentlichungsnummer: WO 2006/119805

(56) Entgegenhaltungen:
- DE-A1- 2 453 796
- DE-B- 1 241 847
- JP-A- 2002 295 948
- US-A- 3 104 533
- US-A- 4 879 881
- PATENT ABSTRACTS OF JAPAN Bd. 2003, Nr. 07, 3. Juli 2003 (2003-07-03) -& JP 2003 075046 A (MITSUBISHI ELECTRIC CORP), 12. März 2003 (2003-03-12)

## Beschreibung

Die vorliegende Erfindung betrifft ein Kältegerät mit Umluftkühlung, d.h., ein Kältegerät, in dessen Gehäuse ein Verdampferbereich und ein Kühlbereich zur Aufnahme von Kühlgut voneinander abgeteilt sind und der Kühlbereich durch aus dem Verdampferbereich zugeführte Kaltluft gekühlt wird. Insbesondere betrifft die Erfindung ein Kältegerät mit Umluftkühlung, das zwei oder mehr voneinander abgeteilte Kühlbereiche aufweist.

Wenn bei einem solchen Kältegerät der erste Kühlbereich zwischen dem Verdampferbereich und dem zweiten Kühlbereich liegt, so muss die Kaltluft aus dem Verdampferbereich auf einem am ersten Kühlbereich entlang verlaufenden Versorgungsweg zum zweiten Kühlbereich geführt werden. Um die Temperaturen der beiden Kühlbereiche unabhängig voneinander führen zu können, sollte der Versorgungsweg des zweiten Kühlbereiches gegen den ersten isoliert sein, damit auf dem Versorgungsweg zum zweiten Kühlbereich fließende Kaltluft nicht den ersten Kühlbereich unerwünscht mitkühlt und dadurch am zweiten Kühlbereich wärmer als erwartet eintrifft.

Herkömmlicherweise ist ein solcher Versorgungsweg durch eine in einer Wand des Kältegerätegehäuses geführte Rohrleitung realisiert, die in Isolationsmaterial der Wand eingebettet ist. Die Ausdehnung der Rohrleitung in Dickenrichtung der Wand muss gering gehalten werden, um auch dort eine ausreichende Schichtdicke des Isolationsmaterials in der Wand unterbringen zu können. Um dennoch eine ausreichende freie Querschnittsfläche der Rohrleitung zu erreichen, wird daher im Allgemeinen eine langgestreckte, flache Querschnittsform gewählt. Der Abstand dieser Rohrleitung von einer Innenhaut der Wand muss groß genug sein, damit, wenn die Wand in herkömmlicher Weise ausgeschäumt wird, um eine Isolationsschicht zu bilden, dieser Schaum ungehindert zwischen Innenhaut und Rohrleitung eindringen kann, um dort eine wirksame Isolation zu schaffen. Um so breiter aber die Rohrleitung ist, um so größer ist der hierfür erforderliche Abstand der Rohrleitung von der Innenhaut. Um so näher muss sie folglich an der Außenhaut liegen, und um so schlechter ist folglich die Isolation des Versorgungsweges zur Umgebung des Geräts. Dies ist sehr nachteilig, weil die in dem Versorgungsweg zirkulierende Luft kälter ist als die Kühlbereiche selber, so dass in der Isolationsschicht zwischen ihr und der Umgebung ein besonders starkes Temperaturgefälle entsteht und dementsprechend der Wärmezustrom in das Gerät an dieser Stelle besonders stark ist.

Natürlich ließe sich dieser Wärmezustrom verringern, indem die Dicke die Isolationsschicht zumindest in der Umgebung des Kaltluftversorgungsweges vergrößert wird, doch führt dies zu einem Verlust an nutzbarem Volumen in dem Kühlbereich, an dem der Versorgungsweg entlang führt.

Die DE 24 53 796 offenbart ein Kältegerät mit einem Gehäuse, in dem ein Verdampferbereich und zwei Kühlbereiche voneinander abgeteilt sind und von dem eine Wand eine feste Innenhaut, eine feste Außenhaut und eine dazwischen liegende Schicht aus expandiertem Isolationsmaterial aufweist. Ein Kaltluftversorgungsweg verläuft in der Wand vom Verdampferbereich an einem ersten Kühlbereich entlang zu einem zweiten Kühlbereich. Ein Formteil aus einem Isolationsmaterial erstreckt sich zwischen dem Kaltluftversorgungsweg und der Innenhaut der Wand und der Kaltluftversorgungsweg ist von dem expandierten Isolationsmaterial durch eine Zwischenwand getrennt. Die Zwischenwand ist als Hohlprofil mit wenigstens einem Hohlraum ausgebildet, durch den der Kaltluftversorgungsweg verläuft

Aufgabe der Erfindung ist daher, ein Kältegerät mit Umluftkühlung zu schaffen, bei dem eine wirksame Isolierung eines in einer Wand des Gerätes verlaufenden Kaltluftversorgungsweges sowohl zur Umgebung als auch zu dem benachbarten Kühlbereich bei geringer Wandstärke gewährleistet ist.

Die Aufgabe wird dadurch gelöst, dass bei einem Kältegerät mit einem Gehäuse, in dem ein Verdampferbereich und wenigstens zwei Kühlbereiche von einander abgeteilt sind und von dem eine Wand eine feste Innenhaut, eine feste Aussenhaut und eine dazwischen liegende Schicht aus expandiertem Isolationsmaterial aufweist, wobei ein Kaltluftversorgungsweg in der Wand vom Verdampferbereich am ersten Kühlbereich entlang zum zweiten Kühlbereich verläuft, einerseits ein Formteil aus einem Isolationsmaterial sich zwischen dem Kaltluftversorgungsweg und der Innenhaut der Wand erstreckt und andererseits der Kaltluftversorgungsweg von dem expandierten Isolationsmaterial durch eine Zwischenwand getrennt ist, wobei die Zwischenwand als Hohlprofil mit wenigstens einem Hohlraum ausgebildet ist, durch den der Kaltluftversorgungsweg verläuft, wobei eine der Innenhaut zugewandte Vorderwand des Hohlraums an dem Formteil abgestützt ist, dass das Formteil einen U-förmigen Querschnitt mit einem an der Innenhaut anliegenden Boden und zwei von dem Boden zu der Zwischenwand hin abstehenden Schenkeln hat, dass ein über Durchgangsöffnungen in der Innenhaut mit dem ersten Kühlbereich kommunizierender Kaltluftverteilerweg von dem Kaltluftversorgungsweg getrennt zwischen der Zwischenwand und der Innenhaut verläuft, und dass einer der Schenkel des Formteils den Kaltluftverteilerweg von dem Kaltluftversorgungsweg isoliert.

Die Zwischenwand ist vorzugsweise durch ein preiswert, insbesondere aus Kunststoff, zu fertigendes Strangprofil gebildet.

In dem das Formteil zwischen dem Versorgungsweg und der Innenhaut angebracht wird, ist die Lückenlosigkeit der Isolation zwischen dem Versorgungsweg und der Innenhaut gewährleistet, unabhängig davon, wie gering der Abstand zwischen dem Versorgungsweg und der Innenhaut sein mag, oder wie gross die Breite des Versorgungsweges sein mag. Durch die Zwischenwand ist der Versorgungsweg davor geschützt, beim Expandieren des Isolationsmaterials durch Eindringend des Isolationsmaterials verstopft zu werden.

Die Zwischenwand, die im allgemeinen, um eine ausreichende Druckfestigkeit gegenüber dem expandierten Isolationsmaterial zu erreichen, aus einem massiven Kunststoffmaterial bestehen wird, hat vorzugsweise einen U-förmigen Querschnitt mit einem Boden und zwei von dem Boden ausgehenden Schenkeln, deren freie Enden die Innenhaut berühren und so einen von dem expandierten Isolationsmaterial getrennten Kanal begrenzen. In diesem Kanal ist das Formteil zwischen der Zwischenwand und der Innenhaut eingeschlossen, um den Kaltluftversorgungsweg gegenüber der Innenhaut zu isolieren.

Um Materialkosten zu sparen und gleichzeitig möglichst viel freien Querschnitt für den Kaltluftversorgungsweg zur Verfügung zu haben, ist es wünschenswert, die Stärke der Zwischenwand so gering wie möglich zu machen. Um dennoch eine ausreichende Druckfestigkeit der Zwischenwand gegenüber dem expandierten Isolationsmaterial zu gewährleisten, kann die Zwischenwand mit wenigstens einer von dem Boden abstehenden und an dem Formteil abgestützten Rippe versehen sein.

Eine solche Rippe ist zweckmässigerweise an ihrem an dem Formteil abgestützten Ende verbreitert, um die von der Rippe auf das Formteil übertragene Kraft auf eine grosse Oberfläche zu verteilen und so den Druck, dem das Formteil ausgesetzt ist, gering zu halten. Dies erlaubt es, die Dichte des Formteils gering zu halten, was sowohl für die Isolation des Kaltluftversorgungsweges gegenüber der Innenhaut günstig ist, als auch Material und Kosten spart.

Da sich der Kaltluftverteilerweg nicht über die gleiche Länge wie der Kaltluftversorgungsweg bis hin zum zweiten Kühlbereich erstrecken muss, kann das Formteil zweckmässigerweise mit wenigstens einem den Kaltluftverteilerweg absperrenden Vorsprung versehen sein.

Weitere und Vorteile der Erfindung ergeben sich aus der nachfolgenden Beschreibung von Ausführungsbeispielen. Es zeigen:
Fig. 1 eine perspektivische Ansicht schräg von unten des Korpus eines erfindungsgemässen Kältegeräts;
Fig. 2 einen Schnitt durch eine vertikal und in Tiefenrichtung verlaufende Mittelebene des Korpus entlang der Linie II aus Fig. 1 ;
Fig. 3 einen Schnitt durch den oberen Bereich des Korpus in einer gegen die Mittelebene zur Seite versetzten Ebene entlang der Linie in aus Fig. 1;
Fig. 4 eine perspektivische Ansicht der an der Kaltluftversorgungsöffnung angeordneten Haube; und
Fig. 5 eine teilweise geschnittene perspektivische Detailansicht des Korpus des Kältegeräts aus Fig. 1;
Fig. 6 eine Ansicht aus der gleichen Perspektive wie in Fig. 5, unter Weglassung von Innenhaut und Trennwand; und
Fig. 7 eine zu Fig. 5 analoge Ansicht gemäß einer zweiten Ausgestaltung des Kältegeräts.

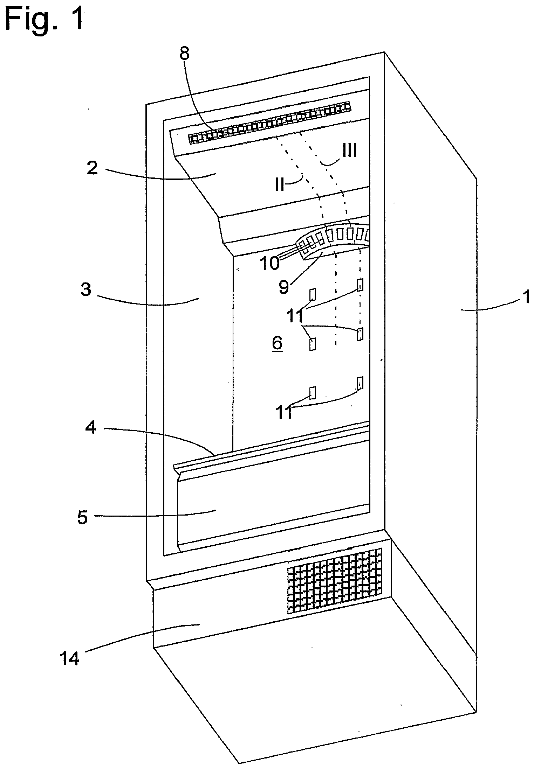

Fig. 1 zeigt eine perspektivische Ansicht eines Korpus 1 eines erfindungsgemäßen Kältegeräts. Das Gerät hat eine Tür, die in der Fig. weggelassen ist. Das Innere des Korpus 1 ist unterteilt in einen Verdampferbereich 2 oben unter der Decke des Korpus 1, einen ersten Kühlbereich 3 und, von diesem durch eine isolierende Zwischenwand 4 getrennt, einen zweiten Kühlbereich 5. Im zweiten Kühlbereich 5 ist ein Auszugkasten untergebracht. Der erste Kühlbereich 3 ist normalerweise durch mehrere Kühlgutträger in übereinander liegende Fächer unterteilt, die allerdings in der Fig. weggelassen sind, um möglichst großflächig die Rückwand 6 des Korpus 1 zeigen zu können.

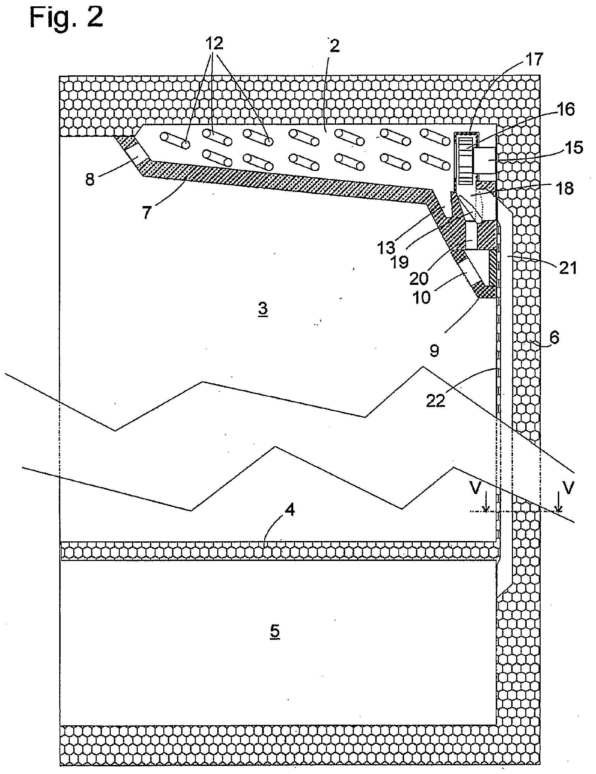

An der Vorderseite einer den Verdampferbereich 2 vom ersten Kühlbereich 3 trennenden Zwischenwand 7 (siehe Fig. 2) ist eine Lufteinlassöffnung 8 gebildet, durch die Luft aus dem ersten Kühlbereich 3 in den Verdampferbereich 2 eintreten kann. Leitungen, durch die Luft aus dem zweiten Kühlbereich 5 zum Verdampferbereich 2 strömen kann, können - in der Fig. nicht sichtbar - in Seitenwänden des Korpus 1 verlaufen; eine andere Möglichkeit ist eine Luftleitung im Innern der Tür, die in Höhe des zweiten Kühlbereichs 5 beginnt und gegenüber der Lufteinlassöffnung 8 endet.

Benachbart zur Rückwand 6 ist an der Zwischenwand 7 eine Verteilerhaube 9 befestigt, an der eine Vielzahl von Luftlöchern 10 gebildet ist, durch die hindurch aus dem Verdampferbereich 2 herrührende Kaltluft sich im Oberteil des ersten Kühlbereichs 3 in diverse Richtungen verteilt. Unterhalb der Verteilerhaube 9 befinden sich an der Rückwand 6 mehrere Paare von Öffnungen 11, aus denen ebenfalls Kaltluft ausströmen kann. Die Höhe dieser Paare von Öffnungen 11 ist so gewählt, dass, wenn Kühlgutträger in dem ersten Kühlbereich 3 montiert sind, jedes Paar von Öffnungen 11 ein Fach versorgt.

Fig. 2 zeigt das Kältegerät der Fig. 1 in einem Schnitt entlang einer sich vertikal und in Tiefenrichtung des Korpus 1 erstreckenden Mittelebene, die in Fig. 1 durch eine strichpunktierte Linie II dargestellt ist. Im Innern des Verdampferbereichs 2 sind in dem Schnitt Kühlschlangen eines Verdampfers 12 zu sehen, die von durch die Lufteinlassöffnung 8 eindringender Luft angeströmt werden. Die Zwischenwand 7 ist zur Rückwand 6 des Korpus hin abschüssig zu einer Rinne 13, in der sich vom Verdampfer 12 abtropfendes Kondenswasser sammelt. Über eine nicht dargestellte Rohrleitung erreicht das Kondenswasser einen im Sockelbereich 14 (siehe Fig. 1) des Korpus 1 untergebrachten Verdunster.

Hinter der Rinne 13, benachbart zur Rückwand 6, ist ein Gebläse untergebracht, das einen Motor 15, ein von diesem angetriebenes Schaufelrad 16 und ein Gehäuse 17 umfasst. An der Vorderseite des Gehäuses 17, in axialer Richtung des Schaufelrades, ist eine Ansaugöffnung gebildet. Die obere Hälfte des Gehäuses 17 verläuft in Umfangsrichtung eng um das Schaufelrad 16, nach unten ist das Gehäuse 17 offen, so dass durch eine Drehung des Schaufelrades 16 radial nach außen beschleunigte Luft nach unten in eine Kammer 18 abfließt.

In dieser Kammer 18 ist eine schwenkbare Klappe 19 untergebracht. In der in der Fig. gezeigten Stellung versperrt die Klappe 19 eine Kaltluftversorgungsöffnung 20, die vertikal nach unten zum ersten Kühlbereich 3 führt. Die Luft wird so zur R ückwand 6 hin und in einen Kaltluftversorgungsweg 21 hinein abgedrängt, der im Innern der Rückwand, vom ersten Kühlbereich 3 durch eine dünne Isolationsschicht 22 getrennt, zum zweiten Kühlbereich 5 führt. Wenn die an eine Zwischenwand 23 zwischen der Kaltluftversorgungsöffnung 20 und der Kaltluftversorgungsleitung 21 angelenkte Klappe 19 in eine in der Fig. als punktierter Umriss dargestellte vertikale Stellung gebracht wird, versperrt sie den Kaltluftversorgungsweg 21, und der Kaltluftstrom erreicht durch die Kaltluftversorgungsöffnung 20 die Verteilerhaube 9. In der Fig. ist eines der Luftlöcher 10 zu sehen, durch die die Luft aus der Verteilerhaube 9 in den ersten Kühlbereich 3 ausströmt.

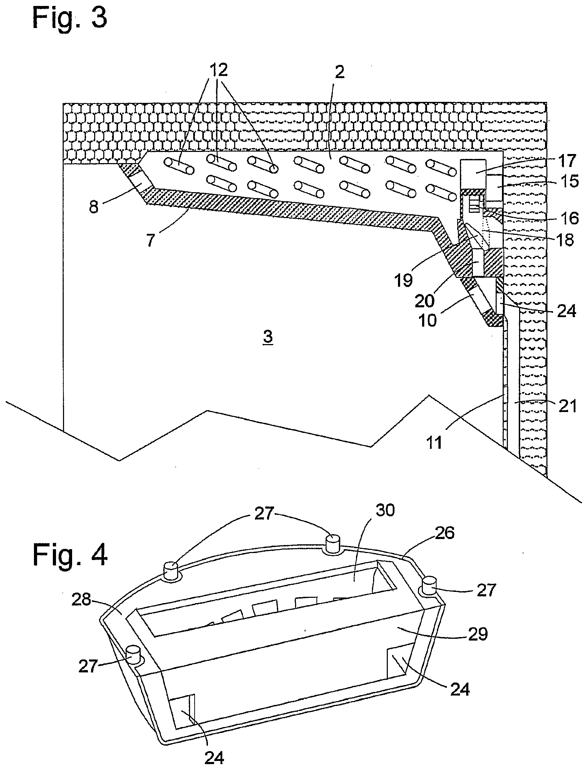

Fig. 3 zeigt einen Schnitt durch das Oberteil des Korpus 1 entlang der in Fig. 1 mit III bezeichneten Ebene. In dieser Fig. ist deutlicher das sich bogenförmig um das Schaufelrad 16 erstreckende Gehäuse 17 zu erkennen. Außerdem ist zu erkennen, dass in dieser Ebene die der Rückwand 6 zugewandte Seite der Verteilerhaube 9 eine Öffnung 24 hat, die mit einer Öffnung der Rückwand 6 fluchtet, die zu einem sich in der Rückwand 6 vertikal erstreckenden Verteilerweg 25 führt. Eine der mehreren weiteren, von dem Verteilerweg 25 in den ersten Kühlbereich 3 führenden Öffnungen 11 ist ebenfalls zu sehen.

Wenn die Kaltluftversorgungsöffnung 20 offen ist, resultiert aus der Umlenkung von durch diese vertikal abwärts strömender Luft in eine schräg abwärts und vorwärts verlaufende Richtung an den Luftlöchern 10 der Haube 9 ein Staudruck im Innern der Haube 9, der einen Teil der Luft in den Verteilerweg 25 hineintreibt. Wie groß dieser Teil ist, ist durch entsprechende Festlegung der Querschnitte der Luftlöcher 10, der Öffnungen 11, 24 und des Verteilerweges 25 festlegbar.

Fig. 4 zeigt eine perspektivische Ansicht der Verteilerhaube 9. Sie ist zusammengesetzt aus einer steifen Außenhaut 26, an der eine Mehrzahl von Zapfen 27 zur Verrastung an der Zwischenwand 7 angeformt sind, einer ersten Schicht aus expandiertem Schaumstoff 28, die innen an der Außenhaut 26 anliegt und einteilig mit dieser geformt sein kann, und einem zweiten Schaumstoffkörper 29. Die Schicht 28 und der Schaumstoffkörper 29 bilden an der Oberseite der Haube 9 einen mit der Kaltluftversorgungsöffnung 20 fluchtenden Durchlass 30, und an der dem Betrachter zugewandten Rückseite der Haube 9 sind, begrenzt von der Schicht 28 und dem Körper 29, zwei Öffnungen 24 zu sehen, die jeweils zu einem von zwei Verteilerwegen 25 führen, die sich in der Rückwand 6 benachbart zu dem Kaltluftversorgungsweg 21 erstrecken.

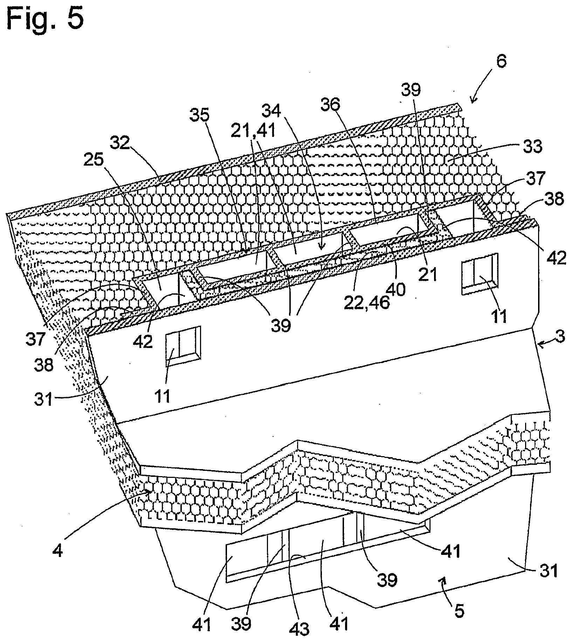

Fig. 5 zeigt einen Schnitt durch die Rückwand 6 des Korpus 1 in Höhe der in Fig. 2 mit V-V bezeichneten Linie. Die Rückwand ist aufgebaut aus einer steifen Innenhaut 31, die, aus einer Kunststoffplatine tiefgezogen, das Innere des Korpus 1 einteilig auskleidet, einer Außenhaut 32 und einer Schicht 33 aus aufgeschäumtem Isoliermaterial. Aus der Schicht 33 ist ein vertikaler Kanal 34 ausgespart, der von der Isolationsschicht 33 durch ein massives Kunststoff-Strangprofil 35 abgegrenzt ist. Das Strangprofil 35 hat eine Rückwand 36, sich von den Rändern der Rückwand 36 zur Innenhaut 31 erstreckende Seitenwände 37 und an deren Rändern an der Innenhaut 31 schaumdicht verklebte langgestreckte Flansche 38. Von der Rückwand 36 abstehende Rippen 39 tragen eine zu der Rückwand 36 parallele Vorderwand 40, die an der bereits erwähnten, als flaches, U-förmiges Profil 46 geformten Isolationsschicht 22 anliegt und sich an dieser gegen den beim Expandieren der Isolationsschaumschicht 33 auf die Rückseite der Wand 36 einwirkenden Druck abstützt. Die Rückwand 36, die Rippen 39 und die Vorderwand 40 begrenzen hier drei zueinander benachbarte, sich über die Länge des Strangprofils erstreckende Hohlräume 41, die gemeinsam den Kaltluftversorgungsweg 21 bilden.

Rechts und links vom Kaltluftversorgungsweg 21, von diesem jeweils durch eine Rippe 39 des Strangprofils 35 und durch zu der Rückwand 36 hin abstehende Schenkel 42 des die Isolationsschicht 22 bildenden Profils getrennt, erstreckt sich jeweils ein Verteilerweg 25.

Unterhalb der fragmentarisch gezeigten Trennwand 4, in dem zweiten Kühlbereich 5, ist in die Innenhaut 31 eine Öffnung 43 geschnitten, auf die der Kaltluftversorgungsweg 21 mündet. In der Öffnung 43 sind noch zwei der Rippen 39 zu erkennen, die die drei Hohlräume 41 des Kaltluftversorgungsweges 21 voneinander trennen.

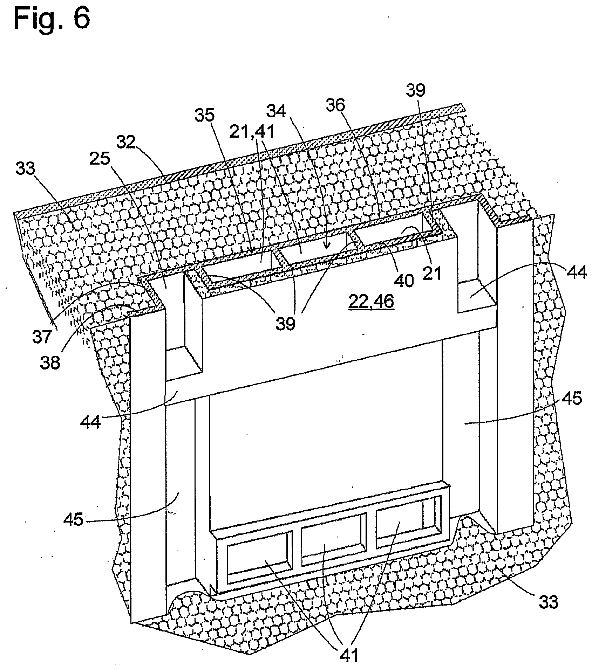

Fig. 6 zeigt den selben Ausschnitt aus der Rückwand 6 des Korpus 1 wie Fig. 5, allerdings mit weggelassener Innenhaut 31 und Trennwand 4. Wie man sieht, endet die Isolationsschicht 22 in Höhe der Trennwand 4, und zwei seitwärts von ihr abstehende Vorsprünge 44 versperren jeweils die Verteilerwege 25 unmittelbar unterhalb der in Fig. 5 gezeigten untersten Durchgangsöffnungen 11. Die in Verlängerung der Verteilerwege 25 unterhalb der Vorsprünge 44 liegenden Hohlräume 45 können, wie in der Fig. gezeigt, nach unten offen gelassen sein, so dass das Isoliermaterial der Schicht 33 beim Aufschäumen in diese Hohlräume 45 eindringen kann. Die dicht und eventuell elastisch gestaucht gegen die Innenhaut 31 und das Strangprofil 35 gedrückten Vorsprünge 44 kann das aufgeschäumte Isolationsmaterial nicht passieren, so dass die Verteilerwege 25 frei bleiben. Die Hohlräume 41 sind am unteren Ende des Strangprofils 35 dicht verstopft, um sie von dem Eindringen des Isolationsmaterials zu schützen.

Beim Ausschäumen drückt das Isolationsmaterial der Schicht 33 zwar großflächig gegen die Rückwand 36 des Strangprofils 35, doch wird letzteres dadurch nicht nennenswert verformt, da seine Vorderwand 40 sich auf der vorgeformten Isolationsschicht 22 des Profils 46 abstützen kann. Aufgrund der großen Kontaktfläche zwischen der Vorderwand 40 und der Isolationsschicht 22 kann letztere eine geringe Dichte aufweisen, ohne Gefahr zu laufen, beim Ausschäumen zerdrückt zu werden. Selbst wenn eine unter dem Druck der Schaumschicht 33 auftretende Verformung des Strangprofils 35 und der Innenhaut 31 so stark sein sollte, dass von dem Isolationsprofil 46 Stücke abbrechen, besteht keine Gefahr für die Durchgängigkeit des Kaltluftversorgungsweges, da dieser in den ringsum geschlossenen Hohlräumen 41 verläuft.

Unterhalb der Vorsprünge 44, wo das Strangprofil 35 nicht mehr durch das Isolationsprofil 46 abgestützt ist, trägt der auf die Rückseite des Strangprofils 35 einwirkende Druck zur Dichtigkeit des Anschlusses des Mündungsbereichs des Kaltluftversorgungsweges an die Öffnung 43 der Innenhaut bei.

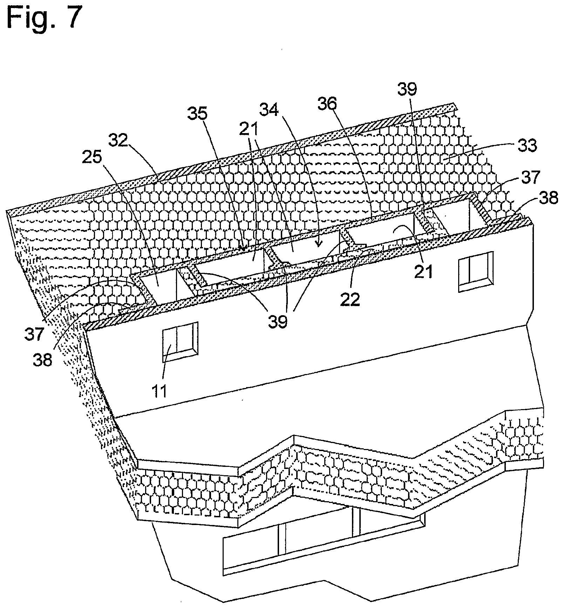

Eine weitere Ausgestaltung des Strangprofils 35 ist in Fig. 7 in einer zu Fig. 5 analogen Ansicht gezeigt. Anstatt mehrere geschlossene Hohlräume zu bilden, hat das Strangprofil 35 hier mehrere zu dem Isolierprofil 46 hin offene, durch die Rippe 39 voneinander getrennte Noten, die den Kaltluftversorgungsweg bilden. Von den vier Rippen 39 sind die zwei mittleren an ihrem die Isolationsschicht 22 des Profils 46 berührenden Enden verbreitert, um einen von der Isoliermaterialschicht 33 auf das Strangprofil 35 ausgeübten Druck großflächig auf die Isolationsschicht zu verteilen.

## Patentansprüche

1. Kältegerät mit einem Gehäuse (1), in dem ein Verdampferbereich (2) und wenigstens zwei Kühlbereiche (3, 5) voneinander abgeteilt sind und von dem eine Wand (6) eine feste Innenhaut (31), eine feste Außenhaut (32) und eine dazwischen liegende Schicht (33) aus expandiertem Isolationsmaterial aufweist, wobei ein Kaltluftversorgungsweg (21) in der Wand (6) vom Verdampferbereich (2) am ersten Kühlbereich (3) entlang zum zweiten Kühlbereich (5) verläuft, wobei ein Formteil (46) aus einem Isolationsmaterial (22) sich zwischen dem Kaltluftversorgungsweg (21) und der Innenhaut (31) der Wand erstreckt und wobei der Kaltluftversorgungsweg (21) von der Schicht (33) durch eine Zwischenwand (35) getrennt ist, wobei eine Vorderwand (40) als Hohlprofil mit wenigstens einem Hohlraum (41) ausgebildet ist, durch den der Kaltluftversorgungsweg (21) verläuft, **dadurch gekennzeichnet, dass** die der Innenhaut (31) zugewandte Vorderwand (40) des Hohlraums (41) an dem Formteil (46) abgestützt ist, dass das Formteil (46) einen U-förmigen Querschnitt mit einem an der Innenhaut (31) anliegenden Boden und zwei von dem Boden zu der Zwischenwand (35) hin abstehenden Schenkeln (42) hat, dass ein über Durchgangsöffnungen (11) in der Innenhaut (31) mit dem ersten Kühlbereich (3) kommunizierender Kaltluftverteilerweg (25) von dem Kaltluftversorgungsweg (21) getrennt zwischen der Zwischenwand (35) und der Innenhaut (31) verläuft, und dass einer der Schenkel (42) des Formteils (46) den Kaltluftverteilerweg (25) von dem Kaltluftversorgungsweg (21) isoliert.

2. Kältegerät nach Anspruch 1, **dadurch gekennzeichnet, dass** die Zwischenwand (35) als ein Strangprofil gefertigt ist.

3. Kältegerät nach Anspruch 1, **dadurch gekennzeichnet, dass** die Zwischenwand (35) einen U-förmigen Querschnitt mit einer Rückwand (36) und zwei von der Rückwand (36) ausgehenden Schenkeln (37) hat, deren freie Enden die Innenhaut (31) berühren, und dass das Formteil (46) zwischen der Zwischenwand (35) und der Innenhaut (31) eingeschlossen ist.

4. Kältegerät nach Anspruch 1, **dadurch gekennzeichnet, dass** die Zwischenwand (35) wenigstens eine von der Rückwand (36) abstehende und an dem Formteil (46) abgestützte Rippe (39) aufweist.

5. Kältegerät nach Anspruch 4, **dadurch gekennzeichnet, dass** die Rippe (39) an ihrem an dem Formteil (46) abgestützten Ende verbreitert ist.

6. Kältegerät nach Anspruch 1, **dadurch gekennzeichnet, dass** das Formteil (46) mit wenigstens einem den Kaltluftverteilerweg (25) absperrenden Vorsprung (44) versehen ist.

## Claims

1. Refrigerating appliance with a housing (1), in which an evaporator area (2) and at least two cooling areas (3, 5) are divided off from each other and of which a wall (6) has a rigid inner skin (31), a rigid outer skin (32) and an intermediate layer (33) made of expanded insulating material, wherein a cold air supply channel (21) runs in the wall (6) from the evaporator area (2) past the first cooling area (3) to the second cooling area (5), wherein a shaped part (46) made from an insulating material (22) extends between the cold air supply channel (21) and the inner skin (31) of the wall and wherein the cold air supply channel (21) is separated from the layer (33) by a partition wall (35), wherein a front wall (40) is embodied as a hollow profile with at least one cavity (41) through which the cold air supply channel (21) runs, **characterised in that** the front wall (40) of the cavity (41) facing towards the inner skin (31) is supported on the shaped part (46), that the shaped part (46) has a U-shaped cross-section with a floor lying against the inner skin (31) and two legs (42) extending from the floor up to the partition wall (35), that a cold air distributor channel (25) communicating via through openings (11) in the inner skin (31) with the first cooling area (3) runs separated from the cold air supply channel (21) between the partition wall (35) and the inner skin (31), and that one of the legs (42) of the shaped part (46) insulates the cold air distributor channel (25) from the cold air supply channel (21).

2. Refrigerating appliance according to claim 1, **characterised in that** the partition wall (35) is manufactured as an extruded profile (35).

3. Refrigerating appliance according to claim 1, **characterised in that** the partition wall (35) has a U-shaped cross-section with a rear wall (36) and two legs (37) emanating from the rear wall (36), of which the free ends touch the inner skin (31), and that the shaped part (46) is enclosed between the partition wall (35) and the inner skin (31).

4. Refrigerating appliance according to claim 1, **characterised in that** the partition wall (35) has at least one rib (39) projecting from the rear wall (36) and supported on the shaped part (46).

5. Refrigerating appliance according to claim 4, **characterised in that** the rib (39) is widened out at its end supported on the shaped part (46).

6. Refrigerating appliance according to claim 1, **characterised in that** the shaped part (46) is provided with at least one projection (44) blocking off the cold air distributor channel (25).

## Revendications

1. Appareil frigorifique comprenant un boîtier (1) dans lequel une zone d'évaporateur (2) et au moins deux zones de réfrigération (3, 5) sont divisées les unes des autres et duquel une paroi (6) présente une peau intérieure (31) rigide, une peau extérieure (32) rigide et une couche (33) en matière d'isolation expansée située entre les peaux, une voie d'alimentation en air froid (21) dans la paroi (6) s'étendant de la zone d'évaporateur (2) en longeant la première zone de réfrigération (3) vers la deuxième zone de réfrigération (5), une pièce moulée (46) constituée d'une matière d'isolation (22) s'étendant entre la voie d'alimentation en air froid (21) et la peau intérieure (31) de la paroi, et la voie d'alimentation en air froid (21) étant séparée de la couche (33) par une paroi intermédiaire (35), une paroi avant (40) étant réalisée comme profilé creux ayant au moins un espace creux (41) à travers lequel s'étend la voie d'alimentation en air froid (21), **caractérisé en ce que** la paroi avant (40) de l'espace intérieur (41), tournée vers la peau intérieure (31), est appuyée sur la pièce moulée (46), **en ce que** la pièce moulée (46) a une section en forme de U avec un fond adjacent à la peau intérieure (31) et deux branches (42) faisant saillie du fond en direction de la paroi intermédiaire (35), **en ce qu'**une voie de distribution d'air froid (25) communiquant avec la première zone de réfrigération (3) par l'intermédiaire d'ouvertures de passage (11) dans la peau intérieure (31) s'étend entre la paroi intermédiaire (35) et la peau intérieure (31) de manière séparée de la voie d'alimentation en air froid (21), et **en ce qu'**une des branches (42) de la pièce moulée (46) isole la voie de distribution d'air froid (25) de la voie d'alimentation en air froid (21).

2. Appareil frigorifique selon la revendication 1, **caractérisé en ce que** la paroi intermédiaire (35) est fabriquée en tant qu'un profilé extrudé.

3. Appareil frigorifique selon la revendication 1, **caractérisé en ce que** la paroi intermédiaire (35) a une section en forme de U avec une paroi arrière (36) et deux branches (37) partant de la paroi arrière (36), dont les extrémités libres touchent la peau intérieure (31), et **en ce que** la pièce moulée (46) est incluse entre la paroi intermédiaire (35) et la peau intérieure (31).

4. Appareil frigorifique selon la revendication 1, **caractérisé en ce que** la paroi intermédiaire (35) présente au moins une nervure (39) faisant saillie de la paroi arrière (36) et appuyée sur la pièce moulée (46).

5. Appareil frigorifique selon la revendication 4, **caractérisé en ce que** la nervure (39) est élargie sur son extrémité appuyée sur la pièce moulée (46).

6. Appareil frigorifique selon la revendication 1, **caractérisé en ce que** la pièce moulée (46) est munie d'au moins une saillie (44) verrouillant la voie de distribution d'air froid (25).
